# EUROPÄISCHE PATENTSCHRIFT

(11) **EP 2 842 087 B1**
(45) Veröffentlichungstag und Bekanntmachung des Hinweises auf die Patenterteilung: **16.09.2020**
(21) Anmeldenummer: 13710303.2
(22) Anmeldetag: 14.03.2013
(51) Int. Cl.: G06Q 10/06, G07C 5/00, G07C 5/08

(54) **VERFAHREN ZUM BESTIMMEN EINES ZU ERWARTENDEN VERBRAUCHSWERTES EINES KRAFTWAGENS**
METHOD FOR DETERMINING AN EXPECTED CONSUMPTION VALUE OF A MOTOR VEHICLE
PROCÉDÉ DE DÉTERMINATION D'UNE VALEUR ATTENDUE DE CONSOMMATION D'UN VÉHICULE AUTOMOBILE

(30) Priorität: 28.04.2012 DE 102012008688
(43) Veröffentlichungstag der Anmeldung: 04.03.2015
(73) Patentinhaber: Audi AG, 85045 Ingolstadt (DE)
(72) Erfinder: LAMPRECHT, Andreas, 86633 Neuburg (DE)
(74) Vertreter: Schuster, Simon
(86) Internationale Anmeldenummer: PCT/EP2013/000789
(87) Internationale Veröffentlichungsnummer: WO 2013/159853

(56) Entgegenhaltungen:
- WO-A1-2008/141646
- US-A- 5 913 917
- US-A1- 2011 160 990
- US-A1- 2011 313 646
- US-A1- 2012 029 803

## Beschreibung

Die Erfindung betrifft ein Verfahren zum Bestimmen eines zu erwartenden Verbrauchswerts eines Kraftwagens.

Zum Bestimmen der maximal möglichen Fahrtreichweite eines Kraftwagens wird üblicherweise die verbleibende Restenergiemenge -also die Kraftstoffmenge bei einem Kraftwagen mit Verbrennungsmotor bzw. die in der Batterie eines elektrischen Kraftwagens gespeicherte Energie -durch den streckenspezifischen Verbrauch des Kraftwagens geteilt. Da die Verbrauchswerte von Kraftwagen fahrsituationsabhängig stark schwanken, ist es dabei wenig zweckmäßig, sich lediglich auf den aktuellen gemessenen Verbrauchswert zu verlassen. Zur Berechnung werden daher üblicherweise mittlere Verbrauchswerte eingesetzt.

Um eine besonders genaue Reichweitenbestimmung zu ermöglichen, ist es bekannt, fahrsituationsabhängige Verbrauchswerte zur Berechnung der möglichen Fahrtreichweite zu verwenden. Hierfür kann die Fahrsituation des Kraftwagens nach Kriterien wie Fahrgeschwindigkeit, befahrene Straßenkategorie oder dgl. klassifiziert werden, wobei jeder solche Fahrsituation ein jeweiliger Verbrauchswert zugeordnet wird.

Um die Genauigkeit der Reichweitenbestimmung weiter zu verbessern, ist es zudem zweckmäßig, für jeden Kraftwagen spezifische Verbrauchswerte zu bestimmen, da sich der Verbrauch auch zwischen Kraftwagen der gleichen Baureihe und/oder Motorisierung unterscheiden kann. Um solche Verbrauchswerte zu erhalten, kann beispielsweise die nach Fahrsituationen kategorisierte Verbrauchshistorie des Kraftwagens gespeichert und für zukünftige Reichweitenvorhersagen verwendet werden.

Hierbei ergibt sich das Problem, dass abhängig vom Fahrverhalten und Nutzungsprofil des Fahrers eines bestimmten Kraftwagens für unterschiedliche Fahrsituationen jeweils unterschiedliche Datenmengen vorliegen. Wird ein Kraftwagen vorwiegend im Stadtverkehr benutzt, so kann es sein, dass beispielsweise für mit Überlandfahrten assoziierte Fahrsituationen keine hinreichende Menge an historischen Verbrauchswerten vorliegt, um eine statistisch signifikante Reichweitenbestimmung in einer solchen Fahrsituation zu ermöglichen.

Die US 2011/0160990 A1 beschreibt, wie fehlende Verbrauchswerte künstlich anhand von Extrapolation entlang einer "trend line" erzeugt werden können.

Der vorliegenden Erfindung liegt die Aufgabe zugrunde, ein Verfahren der eingangs genannten Art bereitzustellen, welches auch für Fahrsituationen, für die nur wenig historische Verbrauchswerte des Kraftwagens vorliegen, eine besonders genaue Reichweitenbestimmung ermöglicht.

Diese Aufgabe wird durch ein Verfahren mit den Merkmalen des Patentanspruchs 1 gelöst.

Bei einem erfindungsgemäßen Verfahren zum Bestimmen eines Verbrauchswerts eines Kraftwagens für eine vorgegebene Fahrsituation wird zunächst eine Datenbank historischer Verbrauchswerte erzeugt. Hierzu wird bei jedem Auftreten der Fahrsituation der tatsächliche Verbrauch des Kraftwagens ermittelt und gespeichert.

Zur Vorhersage des Verbrauchswertes des Kraftwagens in dieser Fahrsituation wird nun geprüft, ob die gespeicherten tatsächlichen Verbrauchswerte einem vorgegebenen Signifikanzkriterium entsprechen - dies kann beispielsweise einfach anhand der Zahl der gespeicherten Werte ermittelt werden. Ist dies der Fall, so wird aus den gespeicherten Werten der zu erwartende Verbrauchswert des Kraftwagens für die vorgegebenen Fahrsituation ermittelt. Im einfachsten Fall kann dies beispielsweise durch Mittelwertbildung geschehen.

Genügen die gespeicherten Verbrauchswerte jedoch nicht dem vorgegebenen Signifikanzkriterium, so ist auf Grundlage der gespeicherten Werte keine zuverlässige Vorhersage des zu erwartenden Verbrauchswerts möglich. Um dennoch eine besonders genaue Reichweitenbestimmung für den Kraftwagen zu ermöglichen, wird anstelle der gespeicherten Werte ein Schätzwert für den zu erwartenden Verbrauch bestimmt und auf dessen Grundlage die Fahrtreichweite des Kraftwagens in der vorgegebenen Fahrsituation ermittelt.

Auf diese Weise kann auch für Fahrsituationen, für die keine hinreichende Datenbasis an historischen Verbrauchswerten des Kraftwagens vorliegt, eine besonders genaue Verbrauchs- und damit Reichweitenbestimmung durchgeführt werden.

Gemäß einer erfindungsgemäßen Variante wird der Schätzwert aus Verbrauchswerten wenigstens eines anderen Kraftwagens für die vorgegebene Fahrtsituation bestimmt. Obwohl die Verbrauchswerte des wenigstens einen anderen Kraftwagens in der Regel nicht exakt mit denjenigen des Kraftwagens, für den die Bestimmung durchgeführt wird, übereinstimmen, kann auf diese Weise dennoch eine verbesserte Reichweitenbestimmung erzielt werden.

Hierbei werden erfindungsgemäß Verbrauchswerte wenigstens eines an- deren Kraftwagens des gleichen Typs und/oder der gleichen Motorisierung verwendet, um möglichst präzise Schätzwerte zu erhalten.

Die Verbrauchswerte werden dabei drahtlos zwischen dem Kraftwagen und einer Rechenvorrichtung ausgetauscht. Gleichzeitig überträgt der Kraftwagen seine eigenen Verbrauchswerte an die Rechenvorrichtung, so dass eine ständig aktualisierte Datenbank von Verbrauchsdaten für unterschiedliche Fahrzeuge zur Verfügung gestellt werden kann.

Neben der Verwendung von Verbrauchsdaten anderer Fahrzeuge ist es gemäß einer weiteren erfindungsgemäßen Variante vorgesehen, den Verbrauch des eigenen Fahrzeugs in einer anderen Fahrsituation zu verwenden. Es hat sich herausgestellt, dass Gruppen von Fahrsituationen existieren, die in ihren Verbrauchswerten im Wesentlichen übereinstimmen. Liegt für die aktuelle Fahrsituation keine statistisch signifikante Datenbasis für die Verbrauchsabschätzung vor, so werden Daten aus einer bezüglich des Verbrauchs vergleichbaren Fahrsituation verwendet, um dennoch eine genaue Verbrauchsschätzung zu erhalten.

Erfindungsgemäß wird die andere Fahrsituation auf Grundlage einer Clusteranalyse über alle Fahrsituationen so ausgewählt, dass wenigstens ein Verteilungsmaß der gespeicherten Verbrauchswerte der anderen Fahrsituation mit dem jeweiligen Verteilungsmaß der gespeicherten Verbrauchswerte für die vorgegebene Fahrsituation im Rahmen eines vorgegebenen Proximitätsmaßes übereinstimmt. Die Clusteranalyse kann sich dabei auf gespeicherte Daten des eigenen Fahrzeugs beschränken, besonders zweckmäßig ist es jedoch, hierfür Flottendaten heranzuziehen. Eine solche Clusteranalyse kann ohne a-priori-Kenntnisse der tatsächlichen Gruppierung der Verbrauchswerte für alle Fahrsituationen durchgeführt werden, so dass zuverlässig Gruppen von Fahrsituation gefunden werden können, die in ihrem Verbrauchsprofil übereinstimmen.

Zweckmäßigerweise wird als Verteilungsmaß ein Median und/oder ein mittlerer Quartilsabstand der Verbrauchswerte verwendet. Diese Verteilungsmaße ermöglichen auch bei schiefen Verteilungen eine zuverlässige Klassifizierung.

Um eine möglichst genaue Verbrauchsabschätzung und damit Reichweitenbestimmung zu ermöglichen, ist es ferner erfindungsgemäß vorgesehen, die Fahrsituation nach Fahrgeschwindigkeit und/oder einer befahrenen Straßenkategorie und/oder einer Steigung der befahrenen Fahrbahn und/oder einer Verkehrslage zu charakterisieren. Selbstverständlich können auch andere Größen, die einen Einfluss auf den Verbrauch des Kraftwagens haben, in die Kategorisierung der Fahrsituation mit einfließen.

Im Folgenden wird die Erfindung und ihre Ausführungsformen anhand der Zeichnung näher erläutert. Es zeigen:
- Fig. 1:: Ein Diagramm zur Veranschaulichung medianer Verbrauchswerte und mittlerer Quartilsabstände für eine Mehrzahl von nach Geschwindigkeiten klassifizierten Fahrsituationen, und
- Fig. 2:: die in Fig. 1 gezeigten Daten als Streudiagramm mit einer auf einer Clusteranalyse beruhenden Gruppierung der Fahrsituationen in Gruppen mit vergleichbaren Verbrauchswerten.

Zur Analyse des Verbrauchsverhaltens von Kraftwagen wurden im Rahmen einer Mehrzahl von Messfahrten mit unterschiedlichen Fahrzeugtypen insgesamt 15 Millionen Messpunkte aufgenommen. Jeder Messpunkt entspricht dabei einem momentanen Verbrauchswert des Kraftwagens und ist mit der im Moment der Messung vorliegenden Fahrtgeschwindigkeit assoziiert. Die Fahrtgeschwindigkeiten wurden dabei in Intervalle mit einer Breite von 10 km/h klassifiziert.

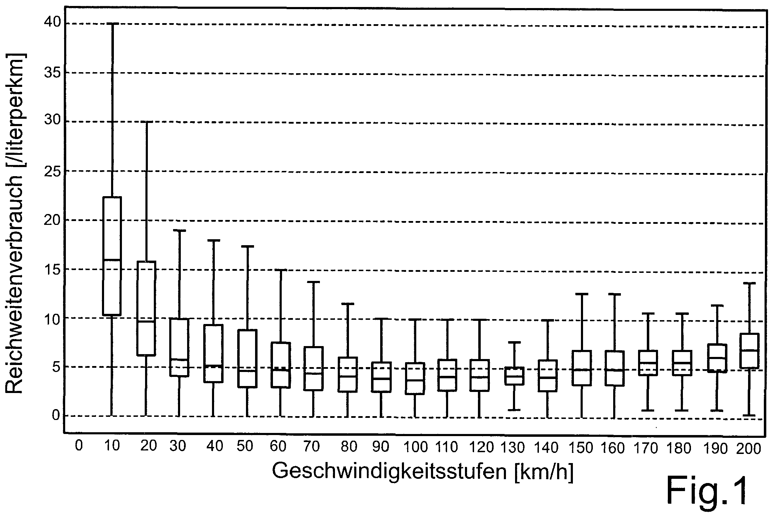

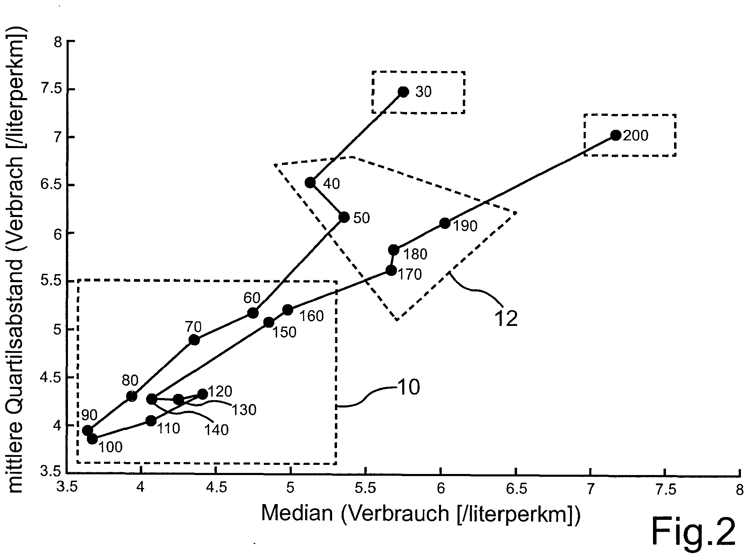

Die Figuren zeigen eine statistische Auswertung dieser Messungen. In Fig. 1 ist für jede Geschwindigkeitsklasse der mediane Verbrauch sowie der mittlere Quartilsabstand in Balkendarstellung aufgetragen. Fig. 2 zeigt den selben Datensatz, wobei für jede Geschwindigkeitsklasse ein Punkt in einem Streudiagramm des medianen Verbrauchs gegenüber dem mittleren Quartilsabstand aufgetragen wurde.

Es ist zu erkennen, dass mehrere Gruppen von Geschwindigkeitsklassen existieren, die in ihren Verbrauchswerten nahe beieinanderliegen. Besonders deutlich wird dies in Fig. 2. Zusätzlich zu den Verteilungsmaßen der Rohdaten sind dort die Ergebnisse einer statistischen Clusteranalyse aufgetragen, welche Geschwindigkeitsklassen mit vergleichbaren Verteilungsmaßen für die Verbrauchswerte gruppieren. Eine erster Cluster 10 umfasst dabei alle Geschwindigkeitsklassen von 60 bis 160 km/h. Besonders auffällig ist ein zweiter Cluster 12, der die Geschwindigkeitsklassen 40 bis 50 km/h sowie 170 bis 190 km/h beinhaltet. Lediglich die Werte für 30 km/h und 200 km/h liegen isoliert.

Diese statistische Gruppierung der Verbrauchswerte kann für die Reichweitenabschätzung des Kraftwagens genutzt werden. Besonders genaue Reichweitenschätzungen können auf Grundlage historischer Verbrauchsdaten des Kraftwagens getroffen werden. Um den Verbrauch des Kraftwagens in einer gegenwärtigen Fahrsituation -oder auch in einer entlang einer geplanten Route zu erwartenden Fahrsituationen -abzuschätzen, wird dabei auf gespeicherte Werte zurückgegriffen, die bei früheren Fahrten in der gleichen Fahrsituation aufgetreten sind.

Je nach dem Benutzungsprofil des Kraftwagens kann es jedoch der Fall sein, dass für bestimmte Fahrsituationen nicht genügend historische Verbrauchswerte vorliegen, um eine statistisch signifikante Verbrauchsschätzung zu ermöglichen. Wurde ein Kraftwagen beispielsweise vorwiegend im Stadtverkehr bewegt, so kann gegebenenfalls die Datenbasis an gespeicherten Verbrauchswerten nicht genügen, um den Verbrauch bei einer Autobahnfahrt korrekt vorherzusagen. In diesem Beispiel kann der Clusteranalyse gemäß Fig. 2 entnommen werden, dass die Stadtverkehrswerte in den Geschwindigkeitsklassen 40 bis 50 km/h statistisch vergleichbar zu denen der Geschwindigkeitsklassen 170 bis 190 km/h sind. Auf Grundlage der im Stadtverkehr gewonnenen Werte kann so der Verbrauch des Kraftwagens bei einer Autobahnfahrt mit mehr als 170 km/h vorhergesagt werden.

Selbstverständlich ist die Klassifizierung der Fahrsituationen nicht auf die beispielhaft gezeigten Geschwindigkeitsklassen beschränkt. Um besonders genaue Verbrauchsprognosen zu ermöglichen, können auch weitere, für den Kraftstoffverbrauch des Kraftwagens relevante Parameter mit in die Analyse einbezogen werden. So ist es beispielsweise möglich, auch geographische Daten, wie beispielsweise die Steigung einer zu befahrenden Strecke, oder auch Verkehrsdaten, wie beispielsweise Informationen über momentan gefahrene Durchschnittsgeschwindigkeiten auf einer geplanten Route, die Stausituation auf dieser Route oder dgl. mit zu berücksichtigen.

Eine weitere Verbesserung der Verbrauchs- und Reichweitenprognose kann durch Kommunikation zwischen individuellen Kraftwagen und einem zentralen Server erzielt werden. So können beispielsweise gemessene und bestimmten Fahrsituationen zugeordnete Verbrauchswerte individueller Kraftwagen an den Server übermittelt und dort gespeichert werden. Benötigt ein Kraftwagen Verbrauchsinformationen für eine Fahrsituation, für die lokal im Kraftwagen keine hinreichende Datenbasis vorhanden ist, so können diese Daten wieder vom Server abgefragt und an den Kraftwagen übermittelt werden.

Insgesamt ergibt sich so ein Verfahren, welches eine besonders präzise Verbrauchsprognose und damit auch eine besonders genaue Reichweitenabschätzung für Kraftwagen ermöglicht.

## Patentansprüche

1. Verfahren zum Bestimmen eines zu erwartenden Verbrauchswertes eines Kraftwagens für eine vorgegebene Fahrsituation, mit den Schritten:
a) Erfassen mittels Sensoren des Kraftwagens und Speichern mittels einer Speichereinheit des Kraftwagens jeweiliger tatsächlicher Verbrauchswerte bei jedem Auftreten der vorgegebenen Fahrsituation, wobei die vorgegebene Fahrsituation anhand einer Fahrgeschwindigkeit und/oder einer befahrenen Straßenkategorie und/oder einer Steigung der befahrenen Fahrbahn und/oder einer Verkehrslage charakterisiert wird, wobei diese für die Fahrsituation charakterisierenden Größen mit den Sensoren bestimmt werden,
b) Prüfen mittels eines Steuergeräts des Kraftwagens anhand der abgespeicherten Verbrauchswerte, ob für die vorgegebene Fahrsituation eine statistisch signifikante Datenbasis für eine Verbrauchsabschätzung vorliegt, indem anhand einer Zahl der abgespeicherten Verbrauchswerte ermittelt wird, ob die abgespeicherten tatsächlichen Verbrauchswerte einem vorgegebenen Signifikanzkriterium entsprechen,
b1) wenn ja, Bestimmen mittels des Steuergeräts des Kraftwagens des zu erwartenden Verbrauchswerts auf Grundlage der abgespeicherten Verbrauchswerte und Durchführen mittels des Steuergeräts des Kraftwagens einer Reichweitenbestimmung für den Kraftwagen durch Verwenden des zu erwartenden Verbrauchswerts,
b2) wenn nein, Ermitteln mittels des Steuergeräts des Kraftwagens eines Schätzwertes für den zu erwartenden Verbrauch und Durchführen mittels des Steuergeräts des Kraftwagens der Reichweitenbestimmung für den Kraftwagen durch Verwenden des Schätzwertes,
wobei der Schätzwert aus gemessenen Verbrauchswerten wenigstens eines anderen Kraftwagens des gleichen Typs und der gleichen Motorisierung für die vorgegebene Fahrsituation, welche mittels drahtloser Kommunikation des Kraftwagens mit einer Rechenvorrichtung bezogen werden, bestimmt wird, oder
wobei der Schätzwert auf Grundlage von den abgespeicherten Verbrauchswerten des Kraftwagens, die in vorgegebenen Zeitabständen drahtlos an die Rechenvorrichtung übermittelt werden, für eine andere bezüglich des Verbrauchs mit der vorgegebenen Fahrsituation vergleichbare Fahrsituation bestimmt wird, wobei die andere Fahrsituation auf Grundlage einer Clusteranalyse über alle Fahrsituationen so ausgewählt wird, dass wenigstens ein Verteilungsmaß der abgespeicherten Verbrauchswerte der anderen Fahrsituation mit dem jeweiligen Verteilungsmaß der abgespeicherten Verbrauchswerte für die vorgegebene Fahrsituation im Rahmen eines vorgegebenen Proximitätsmaßes übereinstimmt.

2. Verfahren nach Anspruch 1,
**dadurch gekennzeichnet, dass**
das wenigstens eine Verteilungsmaß ein Median und/oder ein mittlerer Quartilsabstand der abgespeicherten Verbrauchswerte ist.

## Claims

1. Method for determining an expected consumption value of a motor vehicle for a predetermined driving situation, involving the steps of:
a) Detecting respective actual consumption values upon each occurrence of the predetermined driving situation, by means of the motor vehicle's sensors, and storing these values, by means of the motor vehicle's memory unit, wherein the predetermined driving situation is characterised on the basis of a travelling speed and/or a type of road travelled and/or a gradient of the road travelled and/or a traffic situation, wherein these values characterising the driving situation are determined using the sensors,
b) Checking, by means of the motor vehicle's control device, on the basis of the stored consumption values, whether there is a statistically significant data basis for the predetermined driving situation, for estimating consumption, while determining, on the basis of a number of stored consumption values, whether the stored actual consumption values satisfy a predetermined significance criterion,
b1) if this is the case, determining, by means of the motor vehicle's control device, the expected consumption value, on the basis of the stored consumption values, and determining the range of the motor vehicle, by means of the motor vehicle's control device, using the expected consumption value,
b2) if this is not the case, determining, by means of the motor vehicle's control device, an estimated value for the expected consumption and determining the range of the motor vehicle, by means of the motor vehicle's control device, using the estimated value,
wherein the estimated value is determined on the basis of measured consumption values for at least one other motor vehicle of the same type and with the same engine for the predetermined driving situation, which are obtained by means of the motor vehicle's wireless communication with a computing device, or
wherein the estimated value is determined on the basis of the motor vehicle's stored consumption values, which are transmitted wirelessly at predetermined intervals to the computing device, for another driving situation, which is comparable with the predetermined driving situation, in terms of consumption,
wherein the other driving situation is selected from all driving situations on the basis of a cluster analysis such that at least one distribution measure of the stored consumption values of the other driving situation corresponds with the respective distribution measure of the stored consumption values for the predetermined driving situation within the framework of a predetermined proximity measure.

2. Method according to claim 1,
**characterised in that**
the at least one distribution measure is a median and/or a mean interquartile range of the stored consumption values.

## Revendications

1. Procédé pour déterminer une valeur de consommation attendue d'un véhicule automobile pour une situation de conduite prédéterminée, avec les étapes consistant à :
a) détecter au moyen de capteurs du véhicule automobile et mémoriser au moyen d'une unité de stockage du véhicule automobile des valeurs de consommation réelles respectives à chaque apparition de la situation de conduite prédéterminée, la situation de conduite prédéterminée étant **caractérisée par** une vitesse de conduite et/ou une catégorie de route parcourue et/ou une inclinaison de la voie parcourue et/ou un état de la circulation, ces variables caractérisant la situation de conduite étant déterminées avec les capteurs,
b) vérifier, au moyen d'un dispositif de commande du véhicule automobile sur la base des valeurs de consommation enregistrées, s'il existe une base de données statistiquement significative pour une estimation de la consommation pour la situation de conduite prédéterminée en déterminant, sur la base d'un certain nombre de valeurs de consommation enregistrées, si les valeurs de consommation réelles enregistrées correspondent à un critère de signification prédéterminé,
b1) si oui, déterminer au moyen du dispositif de commande du véhicule automobile la valeur de consommation attendue sur la base des valeurs de consommation enregistrées et effectuer au moyen du dispositif de commande du véhicule automobile une détermination de l'autonomie du véhicule automobile en utilisant la valeur de consommation attendue,
b2) si non, déterminer au moyen du dispositif de commande du véhicule automobile une valeur estimée pour la consommation attendue et effectuer au moyen du dispositif de commande du véhicule automobile la détermination de l'autonomie du véhicule automobile en utilisant la valeur estimée,
dans lequel la valeur estimée est déterminée à partir des valeurs de consommation mesurées d'au moins un autre véhicule automobile du même type et de la même motorisation pour la situation de conduite prédéterminée, qui sont obtenues au moyen d'une communication sans fil du véhicule automobile avec un dispositif de calcul, ou dans lequel la valeur estimée est déterminée sur la base des valeurs de consommation enregistrées du véhicule automobile, qui sont transmises sans fil au dispositif de calcul à des intervalles prédéterminés, est déterminée pour une autre situation de conduite qui est comparable en termes de consommation à la situation de conduite prédéterminée, l'autre situation de conduite étant sélectionnée sur la base d'une analyse de groupe sur toutes les situations de conduite de sorte qu'au moins une mesure de distribution des valeurs de consommation enregistrées de l'autre situation de conduite correspond à la mesure de distribution respective des valeurs de consommation enregistrées pour la situation de conduite prédéterminée dans le cadre d'une mesure de proximité prédéterminée.

2. Procédé selon la revendication 1,
**caractérisé en ce que**
l'au moins une mesure de distribution est une médiane et/ou un quartile moyen des valeurs de consommation enregistrées.
